# EUROPÄISCHE PATENTSCHRIFT

(11) **EP 1 892 455 B1**
(45) Veröffentlichungstag und Bekanntmachung des Hinweises auf die Patenterteilung: **01.12.2010**
(21) Anmeldenummer: 07113030.6
(22) Anmeldetag: 24.07.2007
(51) Int. Cl.: F16M 11/10

(54) **Schwenkarm für den Kameratisch eines Stativkopfes zur Aufnahme einer Film- oder Videokamera**
Pivoting arm for the camera table of a tripod head for fitting a film or video camera
Bras rotatif pour la plaque d'une tête de support destinée à recevoir une caméra cinématographique ou vidéo

(30) Priorität: 24.08.2006 DE 202006012998 U
(43) Veröffentlichungstag der Anmeldung: 27.02.2008
(73) Patentinhaber: Denz, Peter, 81673 München (DE)
(72) Erfinder: Denz, Peter, 81673 München (DE)
(74) Vertreter: Borchert, Uwe Rudolf

(56) Entgegenhaltungen:
- DE-A1- 4 024 585
- FR-A- 2 200 942
- FR-A- 2 878 016
- US-A- 3 603 545
- US-A- 5 037 053
- US-A- 5 713 549
- US-A- 5 853 153

## Beschreibung

Die Erfindung betrifft einen Schwenkarm gemäß dem Oberbegriff des Anspruches 1.

Bekanntlich umfasst ein solcher Stativkopf einen Stator und einen bezüglich des Stators um eine senkrechte Achse herum drehbar gelagerten Rotor zur Aufnahme des um eine wagerechte Achse neigbaren Kameratisches, auf dem die Film- oder Videokamera montiert ist. Zum Verschwenken des Kameratisches dient mindestens ein dort befestigter Schwenkarm, dessen Schwenklage entsprechend des Neigungswinkels des Kameratisches einen Winkelbereich zwischen +/- 90° umfasst.

Da Film- und Videokameras Gewichte bis zu 50 kg und mehr aufweisen, treten trotz gewisser Gewichtsausgleichsmaßnahmen am Stativkopf erhebliche ergonomische Probleme an den Schultergelenken, insbesondere aber an den proximalen Handgelenken des die Kamera bedienenden Operators auf. Die maximale Palmarflexion und Dorsalextension beträgt zusammen nur 80°, wobei die Dorsalextension nur maximal 70° beträgt. Hinzu kommen die erheblichen Belastungen der dazu gehörenden Gelenkbänder des Operators.

Hier Abhilfe bei der Bedienung solcher Film- oder Videokamera mit Hilfe technisch einfacher und kostengünstiger Mittel zu schaffen, ist Aufgabe der Erfindung.

Diese Aufgabe ist erfindungsgemäß durch die Merkmale des Anspruches 1 gelöst.

Durch die erfindungsgemäße Unterteilung des Schwenkarmes in einen Schwenkgriff und eine damit getrieblich verbundene Stelleinheit verbleibt der Schwenkgriff zur Bedienung der Film- oder Videokamera unabhängig von der Neigung des Kameratisches stets in der vom Operator einmal ein- und festgestellten Winkellage, was zu einer signifikanten Entlastung der Gelenke und der zugehörigen Bänder des bedienenden Operators führt.

Die Stelleinheit kann als ein Festglied aufweisendes Parallelkurbelgetriebe mit zwei den gleichen Durchmesser und gleiches Modul aufweisenden Zahnrädern und eine damit kämmende Zahnstange oder damit kämmenden Zahnriemen ausgebildet sein.

Weitere Merkmale der Erfindung ergeben sich aus den Unteransprüchen.

Für ein festes Einstellen der Kipplage einer Kamera ist es bekannt, den die Kamera aufnehmenden Tisch an seinem einen Ende schwenkbar mit einer Grundplatte zu verbinden und über ein auf der Grundplatte befindliches, von einer Handkurbel angetriebenes Schraubengetriebe, das über dort verstell- und schwenkbar gelagerte Laschen auf den Tisch einwirkt, zu kippen; vgl. US 3,603,545.

Es ist ferner bekannt, eine Konsole zur Aufnahme von Monitoren und ähnlichem über ein von einem mittels Stellknopf bedienbaren Schraubengetriebe, das auf ein Parallelkurbelgestänge wirkt, in der Höhe parallel zu sich selbst zu verstellen; vgl. US 5,713,549.

Diese bekannten Anordnungen sind aber zur Lösung der hier vorliegenden Aufgabe zur Entlastung der Gelenke und zugehörigen Bänder des eine Filmkamera bedienenden Operators nicht geeignet.

Die Erfindung ist nachfolgend an Hand eines in der Zeichnung mehr oder minder schematisch dargestellten Ausführungsbeispieles beschrieben. Es zeigen
- Fig. 1: eine perspektivische Darstellung eines nur teilweise dargestellten Stativkopfes mit Kameratisch und daran befestigtem zweiteiligem Schwenkarm gemäß der Erfindung und
- Fig. 2: eine Explosionsdarstellung der in das eine Schwenkarmteil integrierten Stelleinheit

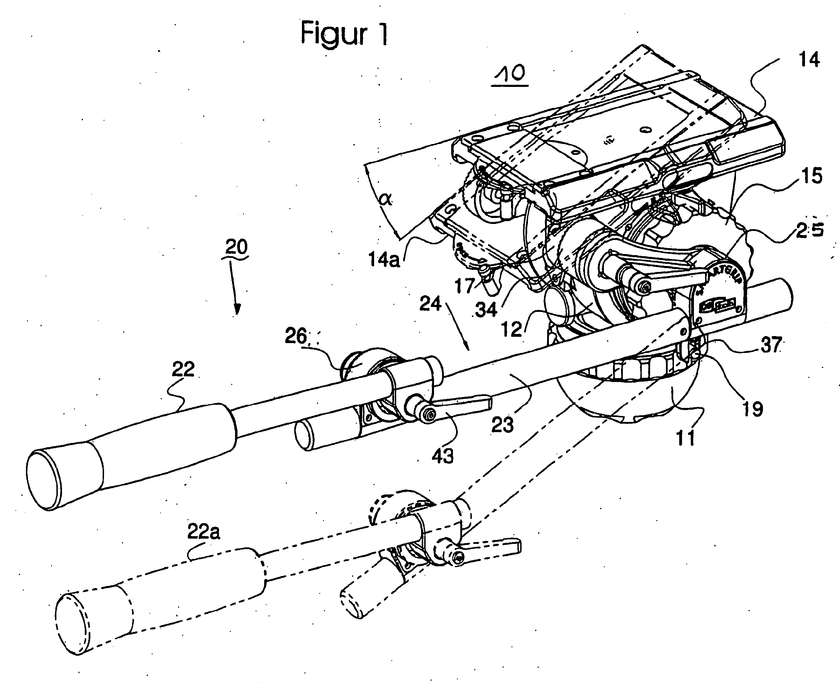

Ein hier nicht dargestelltes Kamerastativ trägt in an sich bekannter Weise einen Stativkopf 10 - vgl. Fig. 1-, der einen Stator 11 sowie einen um eine nicht sichtbare senkrechte Achse drehbaren Rotor 12 umfasst. Auf der Oberseite des Rotors 12 befindet sich ein Kameratisch 14, der über ein Teil 15 um eine nicht sichtbare waagerechte Neigeachse NA um etwa +/- 90° geneigt werden kann. Der den Kameratisch aufnehmende Teil 15 des Stativkopfes trägt im Bereich der Neigungsachse NA ein Lagerauge 17 und der Rotor 12 des Stativkopfes trägt einen Kupplungsstift 19, welche Anschlusspunkte für einen Schwenkarm 20 bilden, mittels dem der Kameratisch um die Neigungsachse in jeweils gewünschtem Ausmaße durch den hier ebenfalls nicht dargestellten Operator nach oben oder unten gegenüber der Waagerechten geneigt werden kann. Der Kameratisch dient der Aufnahme einer hier ebenfalls nicht dargestellten Film- oder Videokamera.

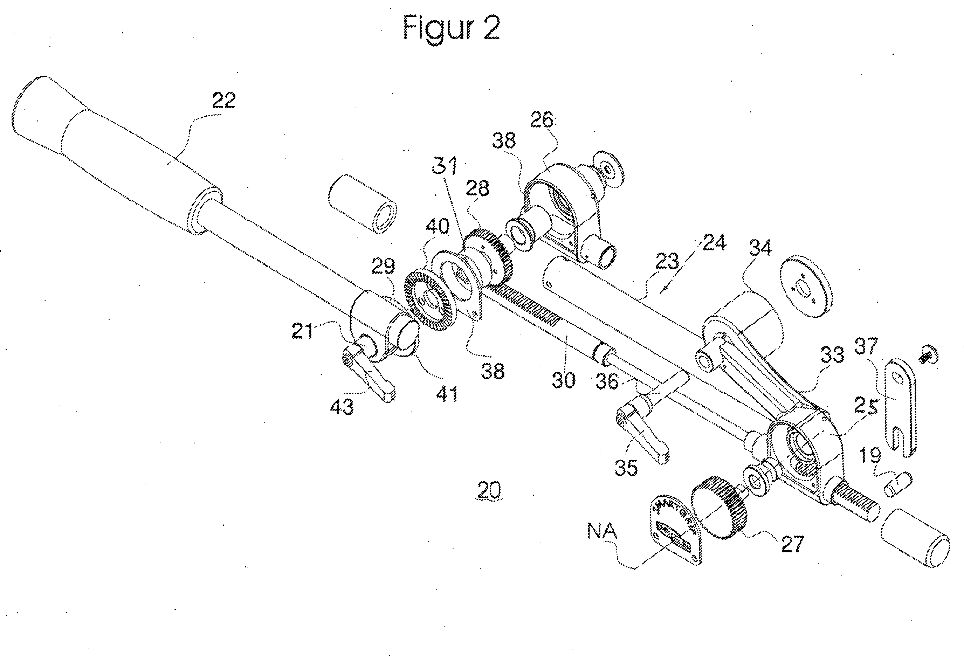

Der Schwenkarm 20 - vgl. auch Fig. 2 - ist zweiteilig ausgebildet und umfasst einen Schwenkgriff 22 und eine noch zu beschreibende Stelleinheit 24, die von einem Rohrstück 23 umfasst ist. Der Schwenkgriff 22 und die Stelleinheit 24 sind über ein ein- und feststellbares Einstelllager 25 sowie mit einem Schwenklager 31 miteinander gelenkig verbunden. Dem Feststellen und dem Lösen des Einstelllagers 25 dient eine mit einem Handgriff versehene Schraube 21.

Der Aufbau und die Anordnung der hier als Parallelkurbeltrieb ausgebildeten Stelleinheit 24 zeigt Fig. 2. Hierzu ist das Rohrstück 23 an seinen Enden mit je einem Gehäuse 25 und 26 versehen, in denen je ein Zahnrad 27 und 28 gleichen Durchmessers und gleichen Moduls drehbar gelagert ist. Mittels einer im Rohrstück 23 gleitenden Zahnstange 30 sind die Zahnräder 27 und 28 getrieblich miteinander verbunden. Der Antrieb des Zahnrades 27 erfolgt über die Neigung des Kameratisches, der Abtrieb über das Zahnrad 28 erfolgt auf den Schwenkgriff 22. Mit dem Gehäuse 25 ist ein mit dem Rohrstück 23 einen spitzen Winkel einschließender Lagerarm 33 verbunden, der ein Lagerauge 34 trägt, durch dass mittig eine mit einem Handgriff 35 versehene Feststellschraube 36 ragt. Ferner ist ein geschlitzter Gabelarm 37 mit dem Gehäuse 25 fest verbunden, der im eingebauten Zustand den Kupplungsstift 19 - vgl. Fig. 1 - umfasst und somit das Gehäuse 25 des beschriebenen Parallelkurbelgetriebes als Festglied definiert.

Das dem Gehäuse 25 abgewandte Gehäuse 26 an dem Rohrstück 23 weist an seiner einen Seite eine Aufnahme 38 - vgl. Fig. 2 -für das Einstelllager 29 auf, welches zwei einander zugewandte Klemmscheiben 40, 41 umfasst, die von der einen Handgriff 43 tragenden Feststellschraube 21 mittig durchsetzt sind. Die Feststellschraube 21 ist gleichachsig zur Drehachse des Zahnrades 28 angeordnet, das mit dem Schwenkgriff über ein Schwenklager 31 in getrieblicher Wirkverbindung steht, wie dies aus Fig. 2 klar ersichtlich ist. Nach Lösen der Feststellschraube 21 kann der Schwenkgriff 22 um die genannte Achse verschwenkt und durch Anziehen der Feststellschraube mittels der genannten Klemmscheiben in der eingenommenen Lage arretiert werden. Auf diese Weise kann durch den hier nicht dargestellten Operator der Schwenkgriff 22 in eine für ihn günstige ergonomische Lage verbracht werden, und zwar unabhängig von der in Fig. 1 dargestellten Lage des Schwenkarmes.

Befinden sich die im Zusammenhang mit Fig. 2 beschriebenen Bauteile in der in Fig. 1 dargestellten Ausgangslage mit dem Kameratisch 14 - mit diesem also über das Lagerauge 34 fest verbunden sowie der Gabelarm 37 in Eingriff mit dem Kupplungsstift 19 - so bewirken über den Schwenkarm 20 erzeugte Neigungen des Kameratisches 14 eine Drehbewegung des Zahnrades 27, die über die Zahnstange 30 auf das Zahnrad 28 drehwinkelsynchron übertragen werden, so dass der mit dem Zahnrad 28 über das Schwenklager 31 drehfest verbundene Schwenkgriff 22 unabhängig von der Neigung des Schwenkarmes, also der Stelleinheit 24, seine über das Schwenklager 31 eingestellte Winkellage beibehält, wie dies durch die gestrichelt dargestellte Schwenkgrifflage 22a in Fig. 1 dargestellt ist.

Auf diese Weise ist die gewünschte ergonomisch günstige Einstellung der Neigung der nicht dargestellten Kamera für den Operator auf verblüffend einfache Weise erzielt.

Die Übertragung der Neigungsbewegung des Kameratisches auf den Schwenkgriff kann auch auf andere als die beschriebene Art erfolgen, zum Beispiel durch ein Parallelogrammgestänge oder auch hydraulisch.

### B E Z U G S Z E I C H E N L I S T E

- 10: Stativkopf
- 11: Stator
- 12: Rotor des Stativkopfes
- 14: Kameratisch
- 15: den Kameratisch aufnehmender Teil des Stativkopfes
- 17: Lagerauge
- 19: Kupplungsstift
- 20: Schwenkarm
- 21: Feststellschraube
- 22: Schwenkgriff
- 22a: Schwenkgrifflage
- 23: Rohrstück
- 24: Stelleinheit
- 25: Gehäuse
- 26: Gehäuse
- 27: Zahnrad
- 28: Zahnrad
- 29: Einstelllager
- 30: Zahnstange
- 31: Schwenklager
- 33: Lagerarm
- 34: Lagerauge an Gehäuse 25
- 35: Handgriff
- 36: Feststellschraube
- 37: Gabelarm
- 38: Aufnahme für Einstelllager 29
- 41: Klemmscheibe
- 42: Klemmscheibe
- 43: Handgriff für Feststellschraube 21

## Patentansprüche

1. Schwenkarm (20) für den Kameratisch (14) eines Stativkopfes zur Aufnahme einer Film- oder Videokamera, insbesondere zum Neigen der Kamera nach oben oder unten gegenüber einer Wagerechten, wobei der Schwenkarm (20) einen Schwenkgriff (22) und eine Stelleinheit (24) umfasst, die ein mit dem Kameratisch (14) verbundenes antreibendes Glied (27) und ein mit dem Schwenkgriff (22) verbundenes abtreibendes Glied (28) aufweist, **dadurch gekennzeichnet, dass** die Glieder als miteinander in Wirkverbindung stehende Teile eines Parallelkurbeltriebes derart ausgebildet sind, dass über die Stelleinheit (24) eine gewählte Einstelllage des Schwenkgriffes (22) unabhängig von der Größe des jeweiligen über den Schwenkarm (20) eingestellten Neigungswinkels (α) des Kameratisches (14) beibehalten ist.

2. Schwenkarm nach Patentanspruch 1, **dadurch gekennzeichnet, dass** der Parallelkurbeltrieb der Stelleinheit (24) zwei den gleichen Durchmesser und gleichen Modul aufweisende Zahnräder (27, 28) sowie eine damit kämmende Zahnstange (30) aufweist, die von einem Rohrstück (23) umfasst ist, das an seinen Stirnseiten die Zahnräder (27, 28) aufnehmende Gehäuse (25, 26) trägt, zu denen das ein Gehäuse (25) als Festglied des Parallelkurbeltriebes dient.

3. Schwenkarm nach dem Patentanspruch 1,
**dadurch gekennzeichnet, dass** das Parallelkurbelgetriebe der Stelleinheit (24) zwei Zahnräder (27, 28) gleichen Durchmesser und gleichen Modul und einen damit in Eingriff stehende als Kettentrieb wirkenden Zahnriemen umfasst.

4. Schwenkarm nach den Patentansprüchen 2 oder 3,
**dadurch gekennzeichnet, dass** dem als Festglied des Parallelkurbelgetriebes dienenden Gehäuse (25) ein Gabelarm (37) zugeordnet ist, der einen am starren Teil (12) des Stativkopfes (10) befindlichen Stift (19) umfasst.

5. Schwenkarm nach einem der vorhergehenden Patentansprüche 2-4, **dadurch gekennzeichnet, dass** das Rohrstück (23) je ein Gehäuse (25, 26) zur Aufnahme je eines der Zahnräder (27, 28) trägt, von denen das eine Ende des einen Gehäuses (25) ein dem Verbinden mit dem Kameratisch (14) im Bereich der Neigungsachse (NA) dienendes, an einem mit dem Rohrstück (23) fest verbundenen Lagerarm (33) befestigtes Lagerauge (34) aufweist, während das andere Gehäuse (26) sowohl das die jeweils gewählte Voreinstellung der Schwenklage des Schwenkgriffes (22) fixierende Einstelllager (29) als auch das Schwenklager (31) trägt.

6. Schwenkarm nach Patentanspruch 5, **dadurch gekennzeichnet, dass** der das Lagerauge (34) tragende Lagerarm (33) mit dem den Zahnstangentrieb (27, 28, 30) umfassenden Rohrstück (23) einen spitzen Winkel einschließt.

## Claims

1. Pivoting arm (20) for the camera table (14) of a tripod head for fitting a film or video camera, in particular for tilting the camera upwards and downwards with respect to a horizontal, wherein the pivoting arm (20) comprises a pivoting handle (22) and a positioning unit (24) comprising a driving element (27) connected to the camera table (14) and a driven element (28) connected to the pivoting handle (22) **characterized in that** the elements are formed as operatively connected parts of a parallel crank drive such that, by means of the positioning unit (24), a selected adjustment position of the pivoting handle (22) is maintained irrespective of the size of the adjusted tilting angle (α) of the camera table (14) adjusted respectively by means of the pivoting arm (20).

2. Pivoting arm according to claim 1, **characterized in that** the parallel crank drive of the positioning unit (24) comprises two gears (27, 28) comprising the same diameter and the same module, as well as a toothed rack (36) mashing therewith which is surrounded by a tube portion (23) which carries, at its front sides, housings (25, 26) taking up the gears (27, 28) with respect to which a housing (25) serves as a locking element of the parallel crank drive.

3. Pivoting arm according to claim 1, **characterized in that** the parallel crank drive of the positioning unit (24) comprises two gears (27, 28) with the same diameter and the same module and a toothed belt engaging therewith and acting as a chain drive.

4. Pivoting arm according to claim 2 or 3, **characterized in that** a forked arm (37) is associated with the housing (25) serving as a locking element for the parallel crank drive which forked arm (37) comprises a pin (19) arranged at a rigid portion (12) of the tripod head (10).

5. Pivoting arm according the one of the proceeding claims 2 to 4, **characterized in that** the tube portion (23) carries one housing (25, 26) each for taking up one each of the gears (27, 28) of which the one end of the one housing (25) comprises a supporting lug (34) serving as connection to the camera table (14) in the area of the tilting axis (NA) and being connected to a supporting arm (33) being fixedly connected to the tube portion (23), while the other housing (26) carries the positioning bearing (29) fixing the respectively selected pre-positioning of the pivoting position of the pivoting handle (22) as well as the pivoting bearing (31).

6. Pivoting arm according to claim 5, **characterized in that** the supporting arm (33) supporting the supporting lug (34) includes a steep angle with the tube portion (23) surrounding the toothed rack drive (27, 28, 30).

## Revendications

1. Bras rotatif (20) pour la plaque (14) d'une tête de support destinée à recevoir une caméra cinématographique ou vidéo, particulièrement pour incliner la caméra vers le haut ou le bas par rapport à une horizontale, sachant que le bras rotatif (20) comprend une poignée rotative (22) et une unité de réglage (24), qui présente une pièce (27) reliée et commandée avec la plaque (14) et une pièce (28) reliée et déviée avec la poignée rotative (22), **caractérisé en ce que** les pièces sont formées en tant que parties en liaison actives les unes avec les autres d'un mécanisme articulé en parallèle, de telle manière que par l'unité de réglage (24) une position de réglage choisie de la poignée rotative (22) soit conservée indépendamment de la taille de l'angle d'inclinaison (α) ajusté par le bras rotatif (20) de la plaque (14).

2. Bras rotatif selon revendication 1 , **caractérisé en ce que** le mécanisme articulé en parallèle de l'unité de réglage (24) présente deux des diamètres identiques et roues d'engrenage (27, 28) présentant le même module, et une barre crantée peignant avec, qui est entourée d'une pièce de tube (23) qui porte sur sa face les boîtiers recevant les roues d'engrenage (27, 28).

3. Bras rotatif selon revendication 1, **caractérisé en ce que** le mécanisme articulé en parallèle de l'unité de réglage (24) comprend deux roues d'engrenage (27, 28) de même diamètre et même module et une courroie dentée engrenée agissant en tant qu'entraînement par chaîne.

4. Bras rotatif selon revendication 2 ou 3, **caractérisé en ce qu'**un bras fourche (37) est rattaché au boîtier (25) servant de membre fixe du mécanisme articulé en parallèle, qui comprend une goupille se trouvant sur la partie fixe (12) de la tête de support (10).

5. Bras rotatif selon l'une des revendications précédentes 2 à 4, **caractérisé en ce que** la pièce de tube (23) porte un boîtier (25, 26) pour la réception de chaque roue d'engrenage (27, 28).

6. Bras rotatif selon revendication 5, **caractérisé en ce que** le bras de réception (33) supportant l'oeil de réception (34) avec la pièce de tube (23) comprenant la courroie dentée engrenée (27, 28, 30) inclut un angle aigu.
